(19) Europäisches Patentamt

European Patent Office

Office européen des brevets

(11) Veröffentlichungsnummer : **0 076 438**
**B1**

(12) **EUROPÄISCHE PATENTSCHRIFT**

(45) Veröffentlichungstag der Patentschrift :
07.08.85

(21) Anmeldenummer : 82108832.5

(22) Anmeldetag : 24.09.82

(51) Int. Cl.⁴ : **H 02 K 33/10**

(54) Regeleinrichtung für einen Schwingankermotor.

(30) Priorität : 05.10.81 DE 3139523

(43) Veröffentlichungstag der Anmeldung :
13.04.83 Patentblatt 83/15

(45) Bekanntmachung des Hinweises auf die Patenterteilung : 07.08.85 Patentblatt 85/32

(84) Benannte Vertragsstaaten :
AT BE CH DE FR GB IT LI LU NL SE

(56) Entgegenhaltungen :
DE-A- 1 488 593
DE-A- 1 952 523
FR-A- 1 535 489
FR-A- 2 374 535
FR-A- 2 410 901
US-A- 3 864 618
US-A- 3 898 732

(73) Patentinhaber : Braun Aktiengesellschaft
Rüsselsheimer Strasse 22
D-6000 Frankfurt/Main (DE)

(72) Erfinder : Bauer, Anton
Paradiesweg 19
D-6233 Kelkheim (DE)

(74) Vertreter : Einsele, Rolf
Braun Aktiengesellschaft Postfach 1120 Frankfurter
Strasse 145
D-6242 Kronberg Taunus (DE)

## Beschreibung

Die Erfindung bezieht sich auf eine Regeleinrichtung für einen Schwingankermotor mit polarisiertem oder unpolarisiertem Schwinganker, der zusammen mit mindestens einer mit ihm gekoppelten und an eine Auflagefläche des Motorgehäuses abgestützten Feder ein mechanisches Schwingsystem bildet und dessen Pole vor den Polen eines zwei Erregerspulen aufweisenden und mit einer Wechselspannungsquelle verbundenen Elektromagneten angeordnet sind, insbesondere für Vibratormotoren in Trockenrasierapparaten, Massageapparaten oder dergleichen.

Elektromagnetische Schwingankermotoren werden wegen ihres einfachen, kollektorlosen und äußerst robusten Aufbaus und wegen der einfachen Umsetzung ihrer funktionsbedingten oszillierenden Hin- und Herbewegung zum Antrieb entsprechender elektrischer Geräte wie Trockenrasierapparate, Massagegeräte, Vibratoren oder dergleichen verwendet.

Ein elektromagnetischer Schwingankermotor der eingangs genannten Art für Rasierapparate, Läutwerke oder dergleichen ist aus der DE-OS 23 23 494 bekannt und besteht aus einem schwenkbar um einen Punkt gelagerten polarisierten oder unpolarisierten Anker, dessen Pole den Polen eines zwei- oder dreischenkligen, als Stator dienenden Elektromagneten gegenüberstehen. Der Elektromagnet wird bei dieser bekannten Anordnung durch Wechselstrom erregt, wodurch der über Federn mit dem äußeren Gehäuse verbundene Anker durch die Anziehungskraft des Stators bzw. Elektromagneten kreisbogenförmig in einer Richtung auf Zug geführt und in entgegengesetzter Richtung durch Druck über einen Führungshebel ein anzutreibendes Element, beispielsweise ein Schermesser hin- und herbewegt.

Die am Anker befestigten Federn dienen dabei zur Fixierung der Mittellage des Schwingankers und zur Kompensation der Massenblindleistung. Die Schwingungsamplitude wird durch die Polform und die Antriebsleistung bzw. durch die Last bestimmt.

Aus der DE-OS 23 36 759 ist ein Wechselstrom-Schwingankermotor für Trockenrasiergeräte bekannt, dessen Schwinganker zusammen mit mindestens einer mit ihm gekoppelten Feder ein mechanisches Schwingsystem bildet, dessen Resonanzfrequenz zwecks Anpassung an die Frequenz von 50 bzw. 60 Hz der jeweils angelegten Betriebsspannung umstellbar ist. Bei diesem bekannten Schwingankermotor trägt eine Motorgrundplatte einen Lagerzapfen für einen Schwinganker, der mit einem vor den Polschuhen des Antriebsspulen tragenden Elektromagnetkerns hin- und herschwingenden Magnetjochs versehen ist. Am Schwinganker greift beidseitig je eine zylinderschraubenförmige Druckfeder ein. Zur Anpassung des bekannten Schwingankers an Spannungen unterschiedlicher Frequenz, d. h. zur entsprechenden Änderung der Resonanzfrequenz des mechanischen Schwingsystems, ist eine Feder mit progressiver Federkennlinie vorgesehen und die Umstellung des Schwingankermotors durch Verändern der Ausgangslage des Schwingankers zum Stator vornehmbar.

Diese bekannten Schwingankermotoren werden üblicherweise durch Serien- oder Parallelschaltung der Erregerspulen des als Stator dienenden Elektromagneten an einer Wechselspannungsquelle von 220 Volt oder 110 Volt betrieben. Zu diesem Zweck ist eine Umschalteinrichtung vorgesehen, mit der das Gerät bei einer Netzspannung von 110 Volt durch Parallelschaltung der Erregerspulen und bei einer Netzspannung von 220 Volt durch Reinschaltung der Erregerspulen betrieben wird. Wird diese Umschaltung jedoch versehentlich vergessen, so kann das Gerät bei Parallelschaltung und Betrieb an einer Wechselspannung von 220 Volt bereits kurzerzeit durch Überhitzung unbrauchbar werden.

Wie bereits oben ausgeführt wurde, wird die volle Betriebsleistung des Schwingankermotors nur dann erreicht, wenn die Erregung des Schwingankers etwa im Bereich der mechanischen Resonanzfrequenz des schwingungsfähigen Bildes erfolgt. Wird daher das Gerät auf eine Netzfrequenz von 50 Hz abgestimmt, so ist bei einem Betrieb mit 60 Hz oder umgekehrt die Schwingamplitude ungenügend. Die zu diesem Zweck in der DE-OS 23 36 759 vorgesehene Umschalteinrichtung erfordert ebenfalls die jeweilige Umschaltung des Geräts auf die jeweils vorliegende Frequenz des speisenden Wechselstromnetzes, was vom Benutzer jedoch nicht in allen Fällen beachtet wird, so daß die vom Gerät abgegebene Leistung nicht seiner vollen Nennleistung entspricht.

Aufgabe der vorliegenden Erfindung ist es, eine Regeleinrichtung für einen Schwingankermotor mit polarisiertem oder unpolarisiertem Schwinganker zu schaffen, die den Betrieb des Schwingankermotors an allen gebräuchlichen Netzspannungen und nahezu beliebiger Frequenz ermöglicht, ohne daß das mit dem Schwingankermotor betriebene Gerät umgeschaltet wird und ohne daß eine Einschränkung der verfügbaren Leistung des Schwingankermotors in Kauf genommen werden muß.

Diese Aufgabe wird erfindungsgemäß dadurch gelöst, daß zwischen der gehäuseseitigen Auflagefläche und der Feder ein Druckaufnehmer angeordnet ist, der eine dem auf ihn ausgeübten Druck proportionale Spannung an einen Rechteckgenerator abgibt, dessen Ausgangsimpulse an die Basis eines Schalttransistors gelegt sind, dessen Kollektor-Emitter-Strecke in Reihe zu den Erregerspulen und einer mit der Wechselspannungsquelle verbundenen Gleichrichterschaltung geschaltet ist.

Die erfindungsgemäße Regeleinrichtung ermöglicht es, den Schwingankermotor an allen gebräuchlichen Netzspannungen und nahezu beliebiger Frequenz ohne eine Umschaltung der Erregerspulen bzw. eine Veränderung des Schwingsystems und ohne Einschränkung der verfügbaren Leistung zu betreiben.

Eine vorteilhafte Ausgestaltung der erfindungsgemäßen Lösung ist dadurch gekennzeichnet, daß der Druckaufnehmer über eine Impedanzwandler- oder Verstärkerstufe und einen Gleichrichter mit dem Eingang des Rechteckgenerators verbunden ist, wobei an den Eingang des Rechteckgenerators einerseits und an Massepotential andererseits ein Glättungskondensator angeschlossen ist und der Rechteckgenerator Rechteckschwingungen mit im wesentlichen konstanter Frequenz aber mit veränderbarem Tastverhältnis abgibt.

Diese Ausgestaltung der erfindungsgemäßen Lösung ermöglicht es, mit standardisierten Bauelementen eine einfache und billige Regelschaltung zur Speisung der Erregerspulen des Elektromagneten aufzubauen. Eine weitere Ausgestaltung der erfindungsgemäßen Lösung ist dadurch gekennzeichnet, daß der Rechteckgenerator aus einem Sägezahngenerator und einer Triggerstufe besteht, so daß durch Überlagerung der Sägezahnspannung mit der am Eingang des Rechteckgenerators anstehenden vom Gleichrichter abgegebenen Regelgleichspannung der Einsatz der Triggerung veränderbar ist.

Diese Ausführungsformen der erfindungsgemäßen Lösung ermöglichen es, durch eine entsprechende Änderungsrichtung bzw. Polung der Regelspannung mit zunehmender Amplitude des Schwingankers den Triggereinsatz zu verzögern. Auf diese Weise wird die Einschaltdauer des Schalttransistors verkürzt und somit von einer bestimmten Amplitude des Schwingankers ab ein weiterer Amplitudenanstieg verhindert. Die erfindungsgemäße Regeleinrichtung wirkt aber auch einem Amplitudenrückgang bei Belastungszunahme entgegen, da dann die Erregerspulen infolge der Verlängerung der Einschaltdauer des Schalttransistors an eine größere Spannungs-Zeitfläche gelegt werden, so daß im Mittel eine längere Durchflutung der Erregerspulen erfolgt.

Als Druckaufnehmer eignet sich eine piezoelektrisch wirksame Scheibe, deren eine Klemme mit Massepotential und deren andere Klemme mit dem Eingang der Impedanzwandler- und Verstärkerstufe verbunden ist. Es sind aber auch andere Istwertgeber möglich, sofern sie die Voraussetzung erfüllen, daß sie eine dem jeweils herrschenden Druck entsprechende Spannung abgeben, wobei die Abhängigkeit der abgegebenen Spannung vom jeweils herrschenden Druck beliebig sein kann, aber mittels der elektronischen Regelschaltung eine entsprechende Anpassung vorgenommen werden kann.

Anhand eines in der Zeichnung dargestellten Ausführungsbeispieles soll der der Erfindung zugrundeliegende Gedanke näher erläutert werden. Es zeigen:

Figur 1 eine schematische Darstellung eines mit einem Schwingankermotor versehenen Trockenrasierapparates und

Figur 2 ein Prinzipschaltbild der erfindungsgemäßen Regelschaltung.

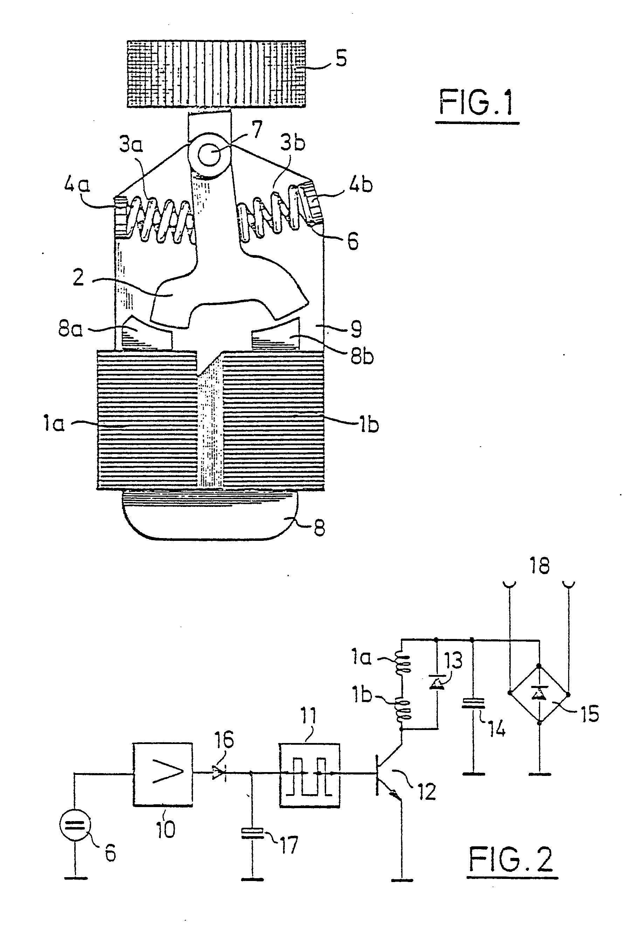

In Fig. 1 ist schematisch eine Draufsicht auf einen Schwingankermotor für den Antrieb eines Trockenrasierapparates dargestellt. In einem Gehäuse 9 ist ein Lagerzapfen 7 für einen Schwinganker 2 vorgesehen, der einerseits mit einem Messerblock 5, der unter einer nicht näher dargestellten Scherfolie hin- und herbewegt wird, und andererseits mit dem Schwinganker 2 selbst verbunden. Der Schwinganker 2 schwingt vor den Polschuhen 8a und 8b des Erregerspulen 1a und 1b tragenden Elektromagneten 8 hin- und her. Am Schwinganker 2 sind beidseitig je eine zylinderschraubenförmige Feder 3a und 3b vorgesehen, die sich gegen ein festes, von einem Fortsatz des Gehäuses 9 gebildetes Widerlager 4a bzw. 4b abstützen.

Gemäß einem Merkmal der Erfindung wird ein Widerlager 4b einer der beiden Federn 3a bzw. 3b dazu benutzt, die auftretende Druckänderung, die zur Schwingankeramplitude in einem proportionalen Verhältnis steht, als Istwert einer Regelgröße zu erfassen. Zu diesem Zweck ist zwischen der Feder 3b und dem Widerlager 4b ein Druckaufnehmer 6 vorgesehen, der eine im jeweils herrschenden Druck proportionale Spannung abgibt. Als Druckaufnehmer 6 eignen sich beispielsweise Scheiben aus piezoelektrisch wirksamen Material, die an ihren Klemmen eine Druck proportionale Spannung abgeben. Es sind jedoch auch andere Formen eines Druckaufnehmers 6 möglich, die wahlweise eine dem Druck proportionale aber auch dem Druck umgekehrt proportionale Spannung abgeben. In beiden Fällen ist durch eine entsprechende Anpaß-Schaltung in der elektronischen Regelschaltung eine entsprechende Auswertung des erfaßten Istwertes möglich.

Die in Fig. 2 dargestellte elektrische Schaltung des Regelschaltkreises zeigt den Druckaufnehmer 6, dessen eine Klemme mit Massepotential und dessen andere Klemme mit dem Eingang einer Impedanzwandler- oder Verstärkerstufe 10 verbunden ist. Der Ausgang der Impedanzwandler- oder Verstärkerstufe 10 ist mit der Anode einer nachgeschalteten Diode 16 verbunden, deren Kathode sowohl mit einem Glättungskondensator 17 als auch mit dem Eingang eines nachgeschalteten frequenzstabilen, im Tastverhältnis jedoch veränderbaren Rechteckgenerators 11 verbunden ist. Der zweite Anschluß des Glättungskondensators 17 ist ebenfalls mit Masse verbunden. Der Ausgang des Rechteckgenerators 11 ist mit der Basis eines nachgeschalteten Schalttransistors 12 verbunden, dessen Kollektor in Reihe zu den beiden in Reihe geschalteten Erregerwicklungen 1a und 1b an den Ausgang einer Diodenbrücke 15 und dessen Emitter an Massepotential geschaltet ist. Parallel zu den in Reihe geschalteten Erregerwicklungen 1a und 1b ist eine Diode 13 mit anodenseitigem Anschluß an den Kollektor des Schalttransistors 12 geschaltet, die der Abmagnetisierung der Erregerspulen 1a und 1b dient.

Die Diodenbrücke 15 ist wechselstromseitig an das speisende Wechselspannungsnetz 18 angeschlossen. Die gleichgerichtete Wechselspannung wird mittels eines weiteren Glättungskondensators 14, der parallel zu den Gleichspannungsklemmen der Diodenbrücke 15 geschaltet ist, geglättet, so daß an der Reihenschaltung der Erregerwicklungen 1a und 1b mit der Kollektor-Emitter-Strecke des Schalttransistors 12 eine nahezu konstante Gleichspannung ansteht. Der Rechteckgenerator 11 kann beispielsweise aus einem Sägezahngenerator in Verbindung mit einer Triggerstufe bestehen. Durch Überlagern der Sägezahnkurve mit der von der Impedanzwandler- oder Verstärkerstufe 10 bzw. der Gleichrichter- und Glättungsstufe 16, 17 abgegebenen Regelgleichspannung ist der Einsatz der Triggerung veränderbar. Auf diese Weise können unterschiedlich große Spannungsblöcke vom Rechteckgenerator 11 abgegeben werden, wobei das jeweilige Tastverhältnis durch den Istwert der Regelspannung bestimmt wird. Entsprechend der vom Rechteckgenerator 11 abgegebenen Spannung wird dann die Basis des Schalttransistors 12 angesteuert, so daß der Schalttransistor 12 entsprechend der in seiner Basis anliegenden Steuerspannung unterschiedlich lang durchgeschaltet bzw. gesperrt bleibt.

Die Funktionsweise der erfindungsgemäßen Regelschaltung soll nachstehend näher erläutert werden.

Die vom Druckaufnehmer 6 abgegebene Ausgangsspannung wird der Impedanzwandler- oder Verstärkerstufe 10 zugeführt und anschließend gleichgerichtet und geglättet. Mit dieser, der Schwingungsamplitude des Schwingankers 2 in etwa proportionalen Gleichspannung, d. h. dem Istwert der Regelspannung, wird der frequenzstabile, im Tastverhältnis jedoch veränderbare Rechteckgenerator 11 angesteuert. Wie bereits oben erläutert wurde, kann dieser Rechteckgenerator aus einem Sägezahngenerator in Verbindung mit einer Triggerstufe bestehen, so daß durch Überlagern der Sägezahnkurze mit der Regelgleichspannung der Einsatz der Triggerung veränderbar ist.

Durch eine entsprechende Richtungsänderung bzw. Polung der Regelgleichspannung wird mit zunehmender Amplitude des Schwingankers 2 der Triggereinsatz verzögert, d. h. das Tastverhältnis verringert und somit die Einschaltdauer des Schalttransistors 12 verkürzt. Von einer bestimmten Schwingungsamplitude des Schwingankers 2 ab wird damit ein weiterer Amplitudenanstieg verhindert. Die Regelschaltung wirkt aber auch einem Amplitudenrückgang bei Belastungszunahme entgegen, da in diesem Falle die Erregerwicklungen 1a und 1b infolge der Verlängerung der Einschaltdauer des Schalttransistors 12 länger durchflutet werden und so mehr Antriebsleistung erhalten.

Wie aus dieser Darstellung ohne weiteres erkennbar wird, kann anstelle des Schalttransistors 12 auch ein anderes Schaltelement verwendet werden, wobei lediglich vorausgesetzt wird, daß das verwendete Schaltelement den Spannungsänderungen an seinem Steueranschluß schnell genug folgen kann.

Damit das mechanische Schwingungssystem auch ohne Abgleich mit seiner Resonanzfrequenz und damit mit dem größten Wirkungsgrad betrieben wird, kann das frequenzbestimmende Schaltungsteil, beispielsweise der Sägezahngenerator des Rechteckgenerators 11 mit der vom Druckaufnehmer 6 erhaltenen und verstärkten Wechselspannung synchronisiert werden. Zu diesem Zweck wird der im Resonanzbereich steilere Phasengang zwischen der erregenden Kraft und der Amplitude des Schwingungsankers 2 benutzt.

Die Anwendbarkeit der Regelschaltung beschränkt sich nicht nur auf ungepolte Antriebssysteme sondern ist ebenso auf gepolte Systeme, d. h. auf Systeme mit einer Vormagnetisierung beispielsweise durch Dauermagnete, geeignet, wobei dann allerdings anstelle des einfachen Schalttransistors 12 ein Gegentaktschalter benötigt wird.

Ebenso ist die erfindungsgemäße Regelschaltung dazu geeignet, die Amplitude des Schwingungsankers 2 von Schwingankermotoren durch Phasenanschnittsteuerung mittels Thyristoren oder Triacs gegenüber Netzspannungsunterschieden am speisenden Wechselspannungsnetz 18 oder entsprechenden Belastungsänderungen zu stabilisieren. In solchen Fällen ist man allerdings mit der mechanischen Abstimmung an die Netzfrequenz des speisenden Wechselspannungsnetzes 18 gebunden.

**Patentansprüche**

1. Regeleinrichtung für einen Schwingankermotor mit polarisiertem oder unpolarisiertem Schwinganker (2), der zusammen mit mindestens einer mit ihm gekoppelten und an einer Auflagefläche des Motorgehäuses abgestützten Feder (3a, 3b) ein mechanisches Schwingsystem bildet und dessen Pole vor den Polen eines zwei Erregerspulen (1a, 1b) aufweisenden und mit einer Wechselspannungsquelle (18) verbundenen Elektromagneten (8) angeordnet sind, insbesondere für Vibratormotoren in Trockenrasierapparaten, Massageapparaten oder dergleichen, dadurch gekennzeichnet, daß zwischen der gehäuseseitigen Auflagefläche (4) und der Feder (3) ein Druckaufnehmer (6) angeordnet ist, der eine dem auf ihn ausgeübten Druck proportionale Spannung an einen Rechteckgenerator (11) abgibt, dessen Ausgangsimpulse an die Basis eines Schalttransistors (12) gelegt sind, dessen Kollektor-Emitter-Strecke in Reihe zu den Erregerspulen (1) und einer mit der Wechselspannungsquelle (18) verbundenen Gleichrichterschaltung (15) geschaltet ist.

2. Regeleinrichtung nach Anspruch 1, dadurch gekennzeichnet, daß der Druckaufnehmer (6) über eine Impedanzwandler- oder Verstärkerstufe (10) und einen Gleichrichter (16) mit dem Eingang des Rechteckgenerators (11) verbunden ist, wobei an den Eingang des Rechteckgenerators (11) einerseits und an Massepotential andererseits ein Glättungskondensator (17) angeschlossen ist.

3. Regeleinrichtung nach Anspruch 1 oder 2, dadurch gekennzeichnet, daß der Rechteckgenerator (11) Rechteckschwingungen im wesentlichen konstanter Frequenz aber mit veränderbarem Tastverhältnis abgibt.

4. Regeleinrichtung nach den Ansprüchen 1 bis 3, dadurch gekennzeichnet, daß der Rechteckgenerator (11) aus einem Sägezahngenerator und einer Triggerstufe besteht, so daß durch Überlagerung der Sägezahnspannung mit der am Eingang des Rechteckgenerators anstehenden vom Gleichrichter (16) abgegebenen Regel-Gleichspannung der Einsatz der Triggerung veränderbar ist.

5. Regeleinrichtung nach Anspruch 1, dadurch gekennzeichnet, daß die Gleichrichterschaltung (15) aus einer wechselstromseitig an das Wechselspannungsnetz (18) angeschlossenen Gleichrichterbrücke besteht, der gleichstromseitig ein zweiter Glättungskondensator (14) parallel geschaltet ist.

6. Regeleinrichtung nach Anspruch 1, dadurch gekennzeichnet, daß parallel zu den Erregerspulen (1a, 1b) eine Diode (13) mit kathodenseitiger Verbindung mit der Gleichrichterbrücke (15) geschaltet ist.

7. Regeleinrichtung nach Anspruch 1, dadurch gekennzeichnet, daß der Druckaufnehmer (6) aus einer piezoelektrisch wirksamen Scheibe besteht, wobei die eine Klemme der Scheibe mit Massepotential und die andere Klemme mit dem Eingang der Impedanzwandler- und Verstärkerstufe (10) verbunden ist.

## Claims

1. Regulator for an oscillating armature motor with polarized or unpolarized oscillating armatures and which forms a mechanical oscillating system together with at least one spring connected thereto and supported on a bearing surface of the motor casing and whose poles are positioned upstream of the poles of an electromagnet having two exciting coils and connected to an a. c. voltage source, particularly for vibration motors in electric shavers, massage equipment or the like, characterized in that between the casing side bearing surface (4) and spring (3) is provided a pressure pickup (6), which supplies a voltage proportional to the pressure exerted thereon to a square-wave generator (11), whose output pulses are applied to the base of a switching transistor (12), whose collector-emitter junction is connected in series with the exciting coils (1) and a rectifier circuit (15) connected to the a. c. voltage source (18).

2. Regulator according to claim 1, characterized in that the pressure pickup (6) is connected across an impedance transformer or amplifier stage (10) and a rectifier (16) to the input of the square-wave generator (11), a smoothing capacitor (17) being connected to the input of the square-wave generator (11) on the one hand and to earth potential on the other.

3. Regulator according to claim 1 or 2, characterized in that the square-wave generator (11) supplies square-wave oscillations with a substantially constant frequency, but with a variable duty cycle.

4. Regulator according to claims 1 to 3, characterized in that the square-wave generator (11) comprises a sawtooth generator and a trigger stage, so that by superimposing the sawtooth voltage on the regulating d. c. voltage supplied by rectifier (16) and occuring at the input of the square-wave generator, the start of triggering can be varied.

5. Regulator according to claim 1, characterized in that the rectifier circuit (15) comprises a rectifier bridge connected to the a. c. voltage network (18) on the a. c. side and which on the d. c. side is connected in parallel with a second smoothing capacitor (14).

6. Regulator according to claim 1, characterized in that a diode (13) with a cathode side connection with the rectifier bridge (15) is connected in parallel to the exciting coils (1a, 1b).

7. Regulator according to claim 1, characterized in that the pressure pickup (6) comprises a piezoelectrically active disk, one terminal of the disk being connected to earth potential and the other terminal to the input of the impedance transformer and amplifier stage (10).

## Revendications

1. Dispositif de régulation pour moteur à armature oscillante polarisée ou non, qui forme un système oscillant avec au moins un ressort auquel elle est accouplée et qui prend appui sur une portée du boîtier du moteur, et dont les pôles sont disposés devant les pôles d'un électroaimant comportant deux bobines d'excitation et relié à une source de tension monophasée, et en particulier pour moteurs vibreurs de rasoirs électriques, vibromasseurs ou appareils similaires, ledit circuit étant caractérisé en ce qu'entre la portée (4) du boîtier et le ressort (3) est disposée une sonde de pression qui délivre une tension proportionnelle à la pression s'exerçant sur elle à un générateur de signaux carrés (11), dont les impulsions de sortie sont appliquées à la base d'un transistor de commutation (12) dont le circuit collecteur-émetteur est en série avec les bobines d'excitation (1) et un circuit de redressement (15) relié à une source de tension monophasée (18).

2. Dispositif de régulation selon la revendication 1, caractérisé en ce que la sonde de pression (6) est reliée par un étage transformateur d'impédance ou amplificateur (10) et un redresseur (16) à l'entrée du générateur de signaux carrés (11), un condensateur de filtrage (17) étant branché entre l'entrée dudit générateur (11) et le potentiel de masse.

3. Dispositif de régulation selon une des revendications 1 ou 2, caractérisé en ce que le générateur (11) délivre des ondes carrées de fréquence sensiblement constante, mais à facteur de durée variable.

4. Dispositif de régulation selon revendications 1 à 3, caractérisé en ce que le générateur de signaux carrés (11) est constitué par un générateur de dents de scie et un étage déclencheur, de sorte que la superposition de la tension en dents de scie et de la tension continue de réglage, délivrée par le redresseur (16) à l'entrée du générateur de signaux carrés, permet de faire varier l'instant de déclenchement.

5. Dispositif de régulation selon revendication 1, caractérisé en ce que le circuit de redressement 15 est constitué par un pont de redresseurs dont le côté alternatif est relié au réseau monophasé (18) et dont le côté continu est en parallèle avec un second condensateur de filtrage (14).

6. Dispositif de régulation selon revendication 1, caractérisé en ce qu'une diode (13) dont la cathode est reliée au pont de redresseurs (15) est en parallèle avec les bobines d'excitation (1a, 1b).

7. Dispositif de régulation selon revendication 1, caractérisé en ce que la sonde de pression (6) est constituée par un disque piézoélectrique, dont une borne est reliée au potentiel de masse et l'autre à l'entrée de l'étage transformateur d'impédance et amplificateur (10).

0 076 438

FIG.1

FIG.2

1